(19) Europäisches Patentamt
European Patent Office
Office européen des brevets

(11) **EP 1 301 037 A1**

(12) **EUROPÄISCHE PATENTANMELDUNG**

(43) Veröffentlichungstag:
**09.04.2003 Patentblatt 2003/15**

(51) Int Cl.7: **H04N 7/167**

(21) Anmeldenummer: **01123235.2**

(22) Anmeldetag: **02.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Beta Research GmbH**
**85774 Unterföhring (DE)**

(72) Erfinder: **LOEHMANN, Ekkehard**
**88236 Aulendorf (DE)**

(74) Vertreter: **Heselberger, Johannes**
**Bardehle, Pagenberg, Dost,**
**Altenburg, Geissler, Isenbruck,**
**Galileiplatz 1**
**81679 München (DE)**

(54) **Schlüsselsystem**

(57) Verfahren und System zur sicheren Übertragung von Informationen (I) von einem Sender (S) an einen Empfänger (E), wobei das Verfahren die folgenden Schritte umfasst: Verschlüsselung der Informationen (I) mit einem allgemeinen Schlüssel (AS) beim Sender (S), Übertragung der verschlüsselten Informationen (I) von dem Sender (S) an einen Empfänger (E) und Entschlüsselung der verschlüsselten Information (I) beim Empfänger (E) mit einem speziellen Schlüssel (SS), und wobei der allgemeine Schlüssel (AS) die Informationen (I) derartig verschlüsselt, dass die verschlüsselten Informationen (I) von verschiedenen speziellen Schlüsseln (SS) entschlüsselt werden können. Außerdem wird ein derartiges Schlüsselsystem, ein Sender und ein Empfänger und die Verwendung der Vorrichtungen und der Verfahren zur Übertragung von Informationen, insbesondere zur Übertragung von Schlüsseln im Rahmen von Pay-TV Anwendungen beansprucht.

Fig. 1

EP 1 301 037 A1

**Beschreibung**

Die vorliegende Erfindung betrifft Verfahren, Vorrichtungen und Systeme zur sicheren Übertragung von Nachrichten, insbesondere im Pay-TV Bereich.

Um beispielsweise Audio- oder Video-Daten von einem Pay-TV Anbieter (Sender) an einen berechtigten Nutzer (Empfänger) zu senden, werden diese Daten üblicherweise verschlüsselt, um einem Unberechtigten den Zugang zu den Daten zu verwehren. Aufgrund der relativ hohen Datenmenge ist es unter Umständen möglich den Schlüssel dieser Verschlüsselung mit Hilfe von Häufigkeitsanalysen zu ermitteln. Im Stand der Technik werden die Daten deshalb mit regelmäßig wechselnden Schlüsseln übertragen, wobei die regelmäßig wechselnden Schlüssel mit einem weiteren Schlüssel verschlüsselt parallel in sogenannten ECM-Nachrichten (Entitlement Control Message) von dem Sender an den Empfänger übermittelt werden. Dieser weitere Schlüssel wird in längeren Abständen im verschlüsselten Zustand in sogenannten EMM-Nachrichten (Entitlement Management Message) übermittelt, wobei die Verschlüsselung mit einem Schlüssel stattfindet, der sowohl in dem Sender, als auch in dem Empfänger vorhanden ist. Dieser Schlüssel kann dem Empfänger beispielsweise mit Hilfe einer SmartCard bereitgestellt werden, die der Empfänger vom Betreiber des Senders erhält.

Wenn ein übergeordneter Schlüssel häufig verwendet wird, um einen untergeordneten Schlüssel zu verschlüsseln, kann dieser beispielsweise mit Hilfe einer Häufigkeitsanalyse oder sogenannten Side-Channel-Attacks, wie zum Beispiel der differenziellen Power-Analyse (DPA), ermittelt werden. Die Schwierigkeit auf diese Weise den Schlüssel zu ermitteln, könnte durch eine Verkürzung der Zeiträume in denen gleiche übergeordnete Schlüssel verwendet werden, erhöht werden. Dadurch wird allerdings gleichzeitig die Datenmenge erhöht, die zwischen dem Sender und den Empfängern übertragen wird, da die neuen Schlüssel dem Empfänger immer wieder mitgeteilt werden müssen und damit auch die notwendige Bandbreite der Datenübertragung vergrößert wird.

Wenn ein übergeordneter Schlüssel von einem Unberechtigten ermittelt wurde, beispielsweise durch Auslesen des Schlüssels aus der SmartCard eines Berechtigten, kann dieser den Schlüssel an weitere unberechtigte Benutzer weitergeben. Diese Weitergabe kann beispielsweise in Form von SmartCards stattfinden, die den gleichen Schlüssel enthalten, wie die ausgeforschte SmartCard eines Empfängers. Derartige Karten werden auch als geklonte Karten bezeichnet. Damit können Unberechtigte gebührenpflichtige Leistungen in Anspruch nehmen und den Betreiber des Senders schädigen. Diese geklonten Karten enthalten normalerweise keine Informationen, die einen Schluss auf die Ursprungskarte zulassen.

Ein weiterer Nachteil des Stands der Technik ist, dass ein Unberechtigter gewisse Kenntnisse über das System erlangen kann, indem er den unverschlüsselten Teil einer Nachricht analysiert und gegebenenfalls manipuliert.

Eine Aufgabe der vorliegenden Erfindung ist es deshalb Verfahren, Vorrichtungen und Systeme bereitzustellen, die die Nachteile des Standes der Technik überwinden und mit denen einem Unberechtigten erschwert wird eine Kopie einer berechtigten Karte zu erstellen, ohne Informationen über die Ursprungskarte auf der geklonten Karte zu hinterlassen. Außerdem soll dem Betreiber des Übertragungssystems ermöglicht werden mit geringem Aufwand geklonte Karten zu erkennen und den Inhabern von bestimmten Schlüsseln, beispielsweise von Schlüsseln die an unberechtigte Benutzer weitergeleitet wurden, den Zugang zu den übertragenen Daten zu verwehren.

Erfindungsgemäß wird die Aufgabe durch ein Verfahren zur sicheren Übertragung von Informationen von einem Sender an einen Empfänger gelöst, wobei das Verfahren die folgenden Schritte umfasst: Verschlüsselung der Informationen mit einem allgemeinen Schlüssel beim Sender, Übertragung der verschlüsselten Informationen von dem Sender an einen Empfänger und Entschlüsselung der verschlüsselten Informationen beim Empfänger mit einem speziellen Schlüssel, wobei der allgemeine Schlüssel die Informationen derartig verschlüsselt, dass die verschlüsselten Informationen von verschiedenen speziellen Schlüsseln entschlüsselt werden können. Vorzugsweise kann durch die Kenntnis eines speziellen Schlüssels nicht auf den allgemeinen Schlüssel oder einen anderen speziellen Schlüssel geschlossen werden.

Bei den Informationen kann es sich um Daten, wie beispielsweise Dateien, Filme, oder Programme handeln. Im Rahmen der Erfindung können vorzugsweise allerdings auch andere Informationen, wie beispielsweise Schlüssel oder Informationen von denen Schlüssel abgeleitet werden können, mit Hilfe des Verfahrens verschlüsselt, übertragen und entschlüsselt werden. Solche Informationen können beispielsweise im Rahmen einer EMM-Nachricht verschlüsselt übertragen werden.

Bei dem Sender kann es sich um jegliche Vorrichtung handeln, die geeignet ist die zu sendenden Informationen gemäß dem Verfahren zu verschlüsseln und zu senden. Dabei können die Funktionen zur Durchführung der Verschlüsselung und des Versendens sowohl in Hardware, als auch in Software realisiert sein. Diese beiden Funktionen müssen auch nicht in einer baulichen Einheit realisiert sein. Die Verschlüsselung kann unter anderem von einer anderen Vorrichtung, die beispielsweise auch an einem anderen Ort steht, durchgeführt werden, als das Versenden.

Bei dem Empfänger kann es sich dementsprechend auch um jegliche Vorrichtung handeln, die geeignet ist die Informationen gemäß dem Verfahren zu empfangen und zu entschlüsseln. Dabei können auch hier die Funktionen zum Empfangen und zur Durchführung der Entschlüsselung sowohl in Hardware, als auch in Software realisiert sein.

Diese beiden Funktionen müssen auch nicht in einer baulichen Einheit realisiert sein, so dass das Empfangen von einer anderen Vorrichtung, die beispielsweise auch an einem anderen Ort steht, durchgeführt werden kann, als das Verschlüsseln.

Die Übertragung der Informationen kann gemäß der vorliegenden Erfindung über jede geeignete Datenverbindung stattfinden, wie beispielsweise Kabelverbindungen oder Funkverbindungen. In Abhängigkeit von der jeweiligen Verbindung können auch unterschiedliche zusätzliche Vorrichtungen zur Übertragung verwendet bzw. benötigt werden.

Unter Verschlüsselung wird grundsätzlich jede kontrollierte Veränderung von Informationen verstanden. In diesem Zusammenhang können beispielsweise die bekannten Verschlüsselungsalgorithmen zusammen mit den entsprechenden Schlüsseln verwendet werden. Im Rahmen der vorliegenden Erfindung ist der Vorgang der Verschlüsselung allerdings nicht auf derartige Algorithmen beschränkt, sondern umfasst jegliche Funktionen mit denen Informationen derart verändert werden, dass ein einfacher Rückschluss auf die ursprünglichen Informationen ohne ein bestimmtes Wissen nicht möglich ist.

Bei einem Schlüssel handelt es sich im Rahmen der vorliegenden Erfindung um das Wissen, welches benötigt wird, um aus den ursprünglichen Informationen die veränderten Informationen zu generieren und welches notwendig ist, um in einfacher Weise von den veränderten Informationen wieder auf die ursprünglichen Informationen zu schließen. Dabei kann sich das Wissen bzw. der Schlüssel für die Verschlüsselung der Informationen, von dem Wissen bzw. Schlüssel zur Entschlüsselung der Informationen unterscheiden.

Im Rahmen der vorliegenden Erfindung wird allerdings ein Schlüsselsystem verwendet, welches einen allgemeinen Schlüssel, einen sogenannten Generalschlüssel, und eine Mehrzahl verschiedener spezieller Schlüssel beinhaltet. Dabei ist der allgemeine Schlüssel derart gewählt, dass Informationen die mit diesem allgemeinen Schlüssel verschlüsselt wurden, mit jedem der entsprechenden verschiedenen speziellen Schlüssel wieder entschlüsselt werden können. Vorzugsweise ermöglicht dieses Schlüsselsystem auch eine Entschlüsselung von Informationen mit dem allgemeinen Schlüssel, wenn die Informationen mit einem der speziellen Schlüssel verschlüsselt wurden.

Durch die Verwendung von einem allgemeinen Schlüssel und mehreren verschiedenen speziellen Schlüsseln können, auf der Grundlage der Verschlüsselung, verschiedene Empfängergruppen unterschieden werden. Vorzugsweise wird der allgemeine Schlüssel im Rahmen der Erfindung derartig gewählt, dass er ohne großen Aufwand an ausgewählte Benutzergruppen angepasst werden kann. Wenn beispielsweise eine Empfängergruppe vom Empfang ausgeschlossen werden soll, kann der Inhaber des Übertragungssystems den allgemeinen Schlüssel derartig verändern, dass dieser Empfängergruppe der Empfang bzw. die Entschlüsselung der übertragenen Daten verwehrt wird.

Die Bezeichnung Empfängergruppe kann im Rahmen der vorliegenden Erfindung sowohl einen einzelnen Benutzer, als auch eine Mehrzahl von Empfängern beschreiben. Wenn eine Mehrzahl von Empfängern über den gleichen speziellen Schlüssel verfügt, kann diese Mehrzahl auf der Grundlage von Gemeinsamkeiten, Unterschieden oder auch zufällig ausgewählt werden.

Des weiteren sollen die speziellen Schlüssel derart gestaltet sein, dass ein Schluss von einem speziellen Schlüssel auf einen anderen speziellen Schlüssel nicht ohne weiteres möglich ist. Im Rahmen der vorliegenden Erfindung besitzt jede Benutzergruppe vorzugsweise einen aus mehreren Schlüsselkomponenten bestehenden speziellen Schlüssel. Der entsprechende allgemeine Schlüssel wird dann beispielsweise auf der Grundlage von jeweils einer speziellen Schlüsselkomponente von jeder Benutzergruppe und vorzugsweise einer Zufallszahl gewählt und kann dadurch mit geringem Aufwand regelmäßig verändert werden, was eine Analyse des Schlüssels wesentlich erschwert.

Mit Hilfe eines derartigen Verfahrens zur sicheren Übertragung von Informationen wird es einem Unberechtigten wesentlich erschwert eine Kopie einer berechtigten Karte zu erstellen, ohne Informationen über die Ursprungskarte auf der geklonten Karte zu hinterlassen. Durch die Verwendung des erfindungsgemäßen Verfahrens ist der Unberechtigte gezwungen die Identität der Ursprungskarte, nämlich den speziellen Schlüssel, auch auf die geklonte Karte zu kopieren, da dieser Schlüssel für den Betrieb der Karte notwendig ist.

Darüber hinaus wird dem Betreiber durch die Verwendung des erfindungsgemäßen Verfahrens das Auffinden der Ursprungskarte auf der Grundlage einer geklonten Karte wesentlich vereinfacht.

Vorzugsweise wird mit diesem Schlüsselsystem eine Information verschlüsselt, auf deren Grundlage im Empfänger ein Schlüssel für die Entschlüsselung einer weiteren Information ausgewählt bzw. abgeleitet werden kann. Diese Information kann derart gestaltet sein, dass sie im Verhältnis zur Übertragung eines kompletten Schlüssels wesentlich weniger Bandbreite in Anspruch nimmt.

In einer bevorzugten Ausführungsform der vorliegenden Erfindung werden alle in einer Nachricht vorhandenen Informationen, d.h. auch die darin vorkommenden administrativen Daten, verschlüsselt. Bei diesen administrativen Daten handelt es sich beispielsweise um Daten in denen die Verwendung der Informationen beschrieben ist. Durch die Verschlüsselung auch dieser Daten wird verhindert, dass ein Unberechtigter auf der Grundlage der unverschlüsselten Informationen Kenntnisse über das verwendete Übertragungssystem erlangt, indem er beispielsweise die administrativen Daten gezielt modifiziert und so eine Fehlersituation in der Karte herbeiführt, die zu Resultaten führen kann, die nicht im Sinne des Betreibers der Karte sind. Bei diesen Informationen kann es sich beispielsweise um administrative Informationen, wie zum Beispiel die Adresse des Empfängers oder Informationen über die Verwendung des übertragenen Schlüssels, handeln. Dadurch wird über alle in der Nachricht vorhandenen Daten eine Art Schutzschicht gezogen, die es nur dem berechtigten Empfänger ermöglicht an diese administrativen Informationen gelangen.

Im Rahmen der Erfindung wird auch ein Verfahren zum Senden von Informationen und ein Verfahren zum Empfangen von Informationen, sowie ein System zur sicheren Übertragung von Informationen, ein Sender zum Verschlüsseln und Senden von Informationen und ein Empfänger zum Empfangen und Entschlüsseln von Informationen beansprucht. Außerdem wird ein Schlüsselsystem zum Verschlüsseln von Informationen und die Verwendung der beschriebenen Verfahren und Vorrichtungen im Rahmen der Übertragung von Informationen für den Pay-TV-Bereich beansprucht.

Im Rahmen der vorliegenden Erfindung wird die Verwendung von derartigen allgemeinen und speziellen Schlüsseln am Beispiel der Übertragung von EMM-Nachrichten für eine Pay-TV-Anwendung auf der Grundlage der beiliegenden Figur beschrieben, wobei

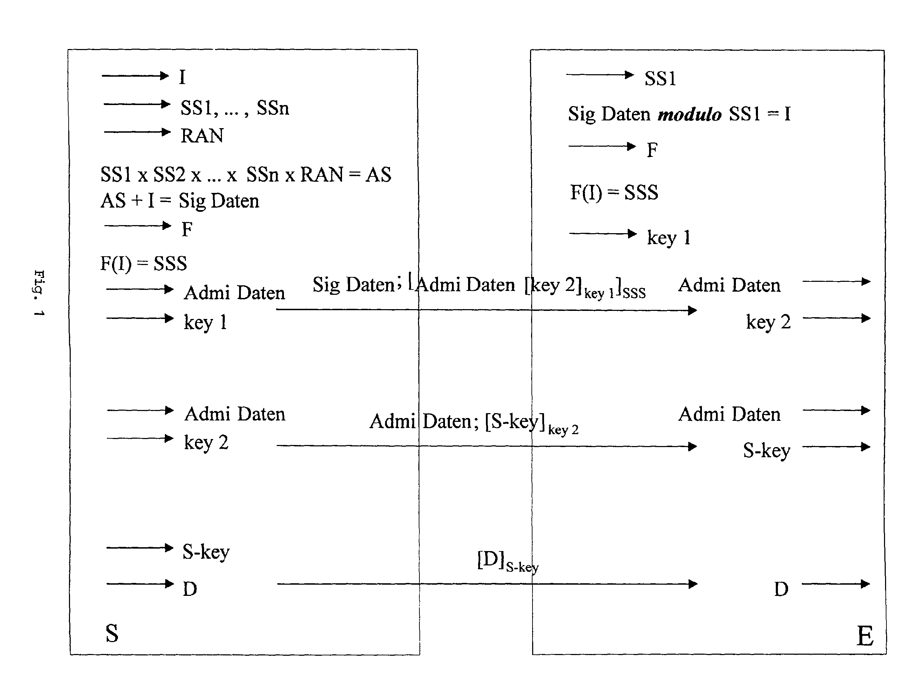

Fig. 1:     ein Übertragungssystem zur Übertragung von Daten nach dem DVB Standard zeigt.

Fig. 1 zeigt, wie im Rahmen des DVB Standards die zu übertragenden Nutzdaten D, wie beispielsweise Audio-, Video- oder Anwendungsdaten, mittels dem DVB Common-Scrambling-Algorithmus durch den Sender S mit Hilfe eines sogenannten Service-Keys S-key verschlüsselt, von dem Sender S an den Empfänger E übertragen und von dem Empfänger E mit dem Service-Key S-key wieder entschlüsselt werden. Der Service-Key S-key wird verschlüsselt und mit einer sogenannten ECM-Nachricht von dem Sender S an den Empfänger E übertragen. Der für die Entschlüsselung der ECM-Nachricht notwendige Schlüssel wird mit der EMM-Nachricht von dem Sender S an den Empfänger E übermittelt. Dabei bestehen diese Nachrichten im wesentlichen aus den verschlüsselten Schlüsseln und unter Umständen auch aus administrativen und anderen Daten.

In der vorliegenden Ausführungsform verfügen der Sender S und die unterschiedlichen Empfänger E jeweils über bestimmtes Wissen, auf dessen Grundlage sich die Empfänger E gegenüber dem Sender S als Berechtigte authentifizieren. In dem vorliegenden Ausführungsbeispiel besteht dieses Wissen bei dem Empfänger E beispielsweise aus einem ersten Schlüssel key 1, dem speziellen Schlüssel SS1 der Empfängergruppe der E angehört oder die aus E besteht und einer Funktion F. Der Sender S verfügt über die Daten D, mindestens einen Service-Key S-key, mindestens einen zweiten Schlüssel key 2, den ersten Schlüssel key 1, die speziellen Schlüssel SS1, ... , SSn von allen Benutzergruppen, die Funktion F, eine Zufallszahl RAN, eine Information I und unter Umständen über administrative Daten Admi Daten.

Die verschlüsselten Nutzdaten D werden von dem Sender S mit einem Service-Key S-key verschlüsselt und an den Empfänger E übertragen. Der Service-Key S-key wird mit einem zweiten Schlüssel key 2 durch den Sender S verschlüsselt und unter Umständen zusammen mit administrativen Daten Admi Daten beispielsweise in einer ECM-Nachricht an den Empfänger E übertragen. Der zweite Schlüssel key 2 wird dann von dem Sender S mit dem ersten Schlüssel key 1 verschlüsselt und dieser verschlüsselte zweite Schlüssel key 2 wird dann noch einmal durch den Sender S, unter Umständen zusammen mit administrativen Daten, mit einem sogenannten Schutzschichtschlüssel SSS verschlüsselt. Der nun mehrfach verschlüsselte zweite Schlüssel key 2 wird dann in einer EMM-Nachricht zusammen mit sogenannten Signalisierungsdaten Sig Daten an den Empfänger E übertragen.

Der Empfänger E wird nun auf der Grundlage der übertragenen Signalisierungsdaten Sig Daten den bei der Verschlüsselung im Sender S verwendeten Schutzschichtschlüssel SSS bestimmen. Mit Hilfe dieses Schutzschichtschlüssels SSS und dem dem Empfänger bekannten ersten Schlüssel key 1 entschlüsselt der Empfänger E den in der EMM-Nachricht übertragenen zweiten Schlüssel key 2. Durch die Kenntnis des zweiten Schlüssels key 2 kann der Empfänger E dann auch den in der ECM-Nachricht übertragenen Service-Key S-key entschlüsseln und damit die verschlüsselten Nutzdaten D entschlüsseln.

Im vorliegenden Beispiel wird mit den Signalisierungsdaten Sig Daten von dem Sender S an den Empfänger E Information I übermittelt, auf deren Grundlage der Empfänger E ermitteln kann, welcher Schutzschichtschlüssel SSS für die Verschlüsselung verwendet wurde. So kann beispielsweise mit Hilfe der Funktion F aus der Information I der Schutzschichtschlüssel SSS erstellt werden. Bei einer solchen Funktion F handelt es sich vorzugsweise um eine Einwegfunktion. Die Information I zur Bestimmung des Schutzschichtschlüssels SSS wird im Sender S mit einem allgemeinen Schlüssel AS verschlüsselt und in dem Empfänger E mit einem speziellen Schlüssel SS1 wieder entschlüsselt.

Im Rahmen der vorliegenden Erfindung handelt es sich bei dem allgemeinen Schlüssel AS um eine Art Generalschlüssel. Informationen, die mit Hilfe des Generalschlüssels verschlüsselt wurden können mit jedem entsprechenden speziellen Schlüssel SS1, .. , SSn entschlüsselt werden. Der allgemeine Schlüssel AS und die speziellen Schlüssel SS1, .. , SSn werden vorzugsweise derartig gewählt, dass es nicht möglich ist - zumindest mit vertretbarem Aufwand - mit der Kenntnis eines speziellen Schlüssel SSi auf einen anderen spezifischen Schlüssel SSi oder den allgemeinen Schlüssel AS zu schließen.

Im Folgenden wird anhand eines Beispiels ein derartiges Schlüsselsystem beschrieben. Jede Benutzergruppe verfügt über eine bestimmte Anzahl von speziellen Schlüsselkomponenten, im vorliegenden Beispiel sind dies vier, die für jede Benutzergruppe den jeweiligen speziellen Schlüssel SS bilden. Diese Schlüsselkomponenten sind innerhalb des speziellen Schlüssels SS sortiert, so dass diese mit Hilfe eines Indizes, der die Position der Schlüsselkomponente innerhalb des speziellen Schlüssels SS angibt, angesprochen werden können. Im vorliegenden Beispiel werden an jeder der vier Positionen drei mögliche Schlüsselkomponenten $P_i$, $Q_i$ und $R_i$ unterschieden. Aufgrund der drei möglichen Schlüsselkomponenten an vier verschiedenen Positionen, können so $3^4$, also 81 verschiedene Benutzergruppen mit Hilfe des Schlüssels unterschieden werden. Im Folgenden werden beispielhaft fünf verschiedenen Benutzergruppen mit ihren jeweiligen Schlüsselkomponenten dargestellt:

| | | | | |
|---|---|---|---|---|
| Empfangsgruppe 1 | P1 = 17; | P2 = 23; | P3 = 7 | P4 = 31 |
| Empfangsgruppe 2 | Q1 = 19; | Q2 = 11; | Q3 = 13 | Q4 = 37 |
| Empfangsgruppe 3 | R1 = 5; | R2 = 3; | R3 = 29 | R4 = 43 |
| Empfangsgruppe 4 | P1 = 17; | P2 = 23; | Q3 = 13 | R4 = 43 |
| Empfangsgruppe 5 | P1 = 17; | P2 = 23; | R3 = 29 | Q4 = 37 |

In dem Sender S wird nun von jeder Benutzergruppe, der die Information I zugestellt werden soll, eine Schlüsselkomponente ausgewählt und auf der Grundlage dieser speziellen Schlüssel SS ein allgemeiner Schlüssel AS generiert. Hierfür wird vorzugsweise von jeder Benutzergruppe die Schlüsselkomponente mit der gleichen Position, also beispielsweise an der Position 1, verwendet. Mit diesem so generierten allgemeinen Schlüssel AS werden dann die zu verschlüsselnden Informationen I zu den Signalisierungsdaten Sig Daten verschlüsselt und zusammen mit einem Hinweis auf die Position der verwendeten Schlüsselkomponenten im Rahmen der EMM-Nachricht an den Empfänger E übermittelt. Der Empfänger E entschlüsselt dann die Information I unter Verwendung des entsprechenden speziellen Schlüssels SS.

Ein derartiger allgemeiner Schlüssel AS wird im vorliegenden Beispiel durch eine Multiplikation der Schlüsselkomponenten der gewünschten Benutzergruppen an der ausgewählten Position und einer Zufallszahl RAN erstellt. Die Verschlüsselung der Information I findet in diesem Beispiel einfach durch die Addition des allgemeinen Schlüssels AS mit der Information I statt. Diese Summe bildet die zu übertragenden Signalisierungsdaten Sig Daten. Diese Signalisierungsdaten Sig Daten können natürlich im Rahmen der vorliegenden Erfindung auch noch einmal für die Übertragung verschlüsselt werden.

Wenn beispielsweise die Information I=8 von dem Sender an diese fünf Empfängergruppen übertragen werden soll, werden zuerst im Sender die Schlüsselkomponenten von jeder berechtigten Empfängergruppe mit einer Zufallszahl RAN, beispielsweise 6, multipliziert und dadurch der allgemeine Schlüssel AS gebildet und dann die zu übertragende Information I, hier 8, addiert. Bei Verwendung der Schlüsselkomponenten an der ersten Position für die Berechnung der Signalisierungsdaten ergibt sich im vorliegenden Beispiel: 17 x 19 x 5 x 6 + 8 = 9698

Dieses Ergebnis bildet die Signalisierungsdaten Sig Daten, die vom Sender S an den Empfänger E übertragen werden. Dem Empfänger wird im Rahmen der Signalisierungsdaten auch ein Hinweis übermittelt, welche Komponente, in diesem Fall die Komponente an der ersten Position, zu Generierung der Signalisierungsdaten verwendet wurde. Die entsprechende empfängerseitig gespeicherte Komponente wird dann verwendet, um die gewünschte Information I zu erlangen. Zu diesem Zweck wird der Wert der Signalisierungsdaten Sig Daten in diesem Beispiel durch den Wert der speziellen Schlüssel dividiert und der ganzzahlige Rest betrachtet. Bei den unterschiedlichen Empfängern ergeben sich daraus die folgenden Ergebnisse:

Empfängergruppe 1: 9686 / 17 = 570 Rest 8
Empfängergruppe 2: 9686 / 19 = 510 Rest 8
Empfängergruppe 3: 9686 / 5 = 1936 Rest 8
Empfängergruppe 4: 9686 / 17 = 570 Rest 8
Empfängergruppe 5: 9686 /17 = 570 Rest 8

Auf diesem Weg erhalten alle Empfängergruppen das gleiche Ergebnis, nämlich die verschlüsselte Information I mit unterschiedlichen Schlüsseln. Auf der Grundlage dieser Information I kann der Empfänger E auf den Schutzschichtschlüssel SSS, hier mit Hilfe der Funktion F, schließen.

Das erfindungsgemäße Verfahren kann nun verwendet werden, um mit geringem Aufwand die Ursprungskarte von geklonten Karten zu ermitteln. Zu diesem Zweck werden die speziellen Schlüssel beziehungsweise die Schlüsselkomponenten von aufgefundenen geklonten Karten durch mehrere Iterationsschritte festgestellt.

Wenn beispielsweise eine geklonte SmartCard aufgefunden wird, kann der Betreiber grundsätzlich nicht ohne weiteres die Benutzergruppe der Ursprungskarte feststellen. Hierfür stellt der Betreiber in mehreren Iterationsschritten der SmartCard verschlüsselte Informationen bereit und analysiert anschließend das Ergebnis der Entschlüsselung durch die SmartCard und bestimmt dann auf der Grundlage der Analyse die Benutzergruppe der Ursprungskarte.

Im folgenden Beispiel wird eine geklonte Karte mit unbekannter Benutzergruppe von dem Betreiber aufgefunden. Um die Benutzergruppe der Ursprungskarte zu bestimmen, verschlüsselt der Betreiber zuerst eine Information, im vorliegenden Beispiel 8, mit den Schlüsselkomponenten $P_1$ und $Q_1$. Wenn das Ergebnis dieser Verschlüsselung von der geklonten Karte nicht entschlüsselt werden kann, ist die erste Schlüsselkomponente der Karte die nicht verwendete Schlüsselkomponente $R_1$. Wenn die geklonte Karte allerdings die verschlüsselte Information wieder korrekt entschlüsseln kann, muss dieser Vorgang noch einmal durchgeführt werden, wobei diesmal eine andere erste Komponente weggelassen wird. Diese Iterationsschritte werden für die erste Komponente so lange durchgeführt, bis die erste Schlüsselkomponente erkannt wurde. Anschließend werden die entsprechenden Iterationsschritte für die folgenden Komponenten, in diesem Beispiel die Komponenten zwei, drei und vier, durchgeführt.

Im folgenden werden diese Iterationsschritte beispielhaft durchgeführt:

Zuerst wird die Information 8 mit Hilfe der ersten Schlüsselkomponenten $P_1$ und $Q_1$ verschlüsselt:

$$19 * 5 + 8 = 103$$

In der aufgefundenen Karte wird nun versucht mit der dort gespeicherten ersten Schlüsselkomponente die Information wieder zu entschlüsseln:

$$103 / 17 = 6 \text{ Rest } 1$$

Nachdem das Ergebnis falsch ist, verwendet die aufgefundene Karte die erste Schlüsselkomponente $R_1$. Wenn im Rahmen der folgenden Iterationsschritte festgestellt wird, dass die weitren Komponenten $P_2$, $R_3$ und $Q_4$ sind, steht fest, dass die Ursprungskarte eine Karte der Benutzergruppe 5 ist.

Nachdem es im vorliegenden Beispiel an jeder der vier Positionen drei unterschiedliche Schlüsselkomponenten gibt, kann der Betreiber mit maximal 3*4, also zwölf Iterationsschritten, die Ursprungskarte der geklonten Karte bestimmen. Dies ist auch nur dem Betreiber und nicht etwa einem Unberechtigten möglich, da nur der Betreiber die unterschiedlichen Schlüsselkomponenten kennt.

Darüber hinaus ist es mit dem erfindungsgemäßen Verfahren nicht nur möglich die Ursprungskarte einer geklonten Karte zu bestimmen, sondern auch eine Benutzergruppe, beispielsweise die der Ursprungskarte einer geklonten Karte, von dem Empfang der Informationen auszuschließen. Hierfür wird bei der Berechnung der Signalisierungsdaten der spezielle Schlüssel dieser Benutzergruppe nicht mehr verwendet. Wenn nun ein Empfänger mit diesem speziellen Schlüssel der Benutzergruppe versucht die übertragenen Informationen zu ermitteln kommt er zu einem falschen Ergebnis. Für den Ausschluss von Benutzergruppen können aber auch andere Verfahren verwendet werden.

Auf diese Wiese kann eine aufgefundene geklonte Karte von dem Betreiber analysiert werden und diese Informationen verwendet werden, um den Inhabern der geklonten Karten und der Ursprungskarte den Zugang zu den übertragenen Daten zu verwehren.

Der Vorteil der verschiedenen Schlüsselkomponenten wird anhand des folgenden Beispiels noch deutlicher. So ist es beispielsweise bei drei Positionen mit 15 verschiedenen Schlüsselkomponenten möglich $3^{15}$, das entspricht etwa 15 Millionen Kombinationen und damit genauso viele Benutzergruppen zu unterscheiden. Jede dieser Benutzergruppen kann allerdings durch 45 Iterationsschritte von dem Anbieter im Rahmen der oben beschrieben kryptographischen Separierung festgestellt werden.

Das erfindungsgemäße Schlüsselsystem bietet Vorteile nicht nur im Bereich von Pay-TV, sondern auch bei der individuellen oder gruppenweisen Übertragung von Nachrichten oder allgemeinen Informationen.

## Patentansprüche

1. Verfahren zur sicheren Übertragung von Informationen (I) von einem Sender (S) an einen Empfänger (E), wobei das Verfahren die folgenden Schritte umfasst:

   - Verschlüsselung der Informationen (I) mit einem allgemeinen Schlüssel (AS) beim Sender (S),
   - Übertragung der verschlüsselten Informationen (I) von dem Sender (S) an einen Empfänger (E) und
   - Entschlüsselung der verschlüsselten Informationen (I) beim Empfänger (E) mit einem speziellen Schlüssel (SS),

     **dadurch gekennzeichnet, dass**

der allgemeine Schlüssel (AS) die Informationen (I) derartig verschlüsselt, dass die verschlüsselten Informationen (I) von verschiedenen speziellen Schlüsseln (SS) entschlüsselt werden können.

2. Verfahren nach Anspruch 1, **dadurch gekennzeichnet, dass** die speziellen Schlüssel (SS) derart gewählt werden, dass von einem speziellen Schlüssel (SS) nicht auf andere spezielle Schlüssel (SS'), oder auf den allgemeinen Schlüssel (AS) geschlossen werden kann.

3. Verfahren nach einem der Ansprüche 1 oder 2, **dadurch gekennzeichnet, dass** zusätzlich zu den Informationen (I) auch administrative Daten (admi Daten) mit dem allgemeinen Schlüssel (AS) verschlüsselt, übertragen und mit einem speziellen Schlüssel (SS) wieder entschlüsselt werden.

4. Verfahren zum Senden von Informationen (I) von einem Sender (S) an einen Empfänger (E), wobei das Verfahren die folgenden Schritte umfasst:

    Verschlüsselung der Informationen (I) mit einem allgemeinen Schlüssel (AS) beim Sender (S), und Übertragung der verschlüsselten Informationen (I) von dem Sender (S) an einen Empfänger (E) derart, dass die Entschlüsselung der verschlüsselten Informationen (I) beim Empfänger (E) mit einem speziellen Schlüssel (SS) durchgeführt werden kann,

    **dadurch gekennzeichnet, dass**
    der allgemeine Schlüssel (AS) die Informationen (I) derartig verschlüsselt, dass die verschlüsselten Informationen (I) von verschiedenen speziellen Schlüsseln (SS) entschlüsselt werden können.

5. Verfahren zum Empfangen von Informationen (I) in einem Empfänger (E) von einem Sender (S), wobei das Verfahren die folgenden Schritte umfasst:

    Empfangen von Informationen (I) vom Sender (S) beim Empfänger (E), wobei die Informationen (I) beim Sender (S) mit einem allgemeinen Schlüssel (AS) verschlüsselt wurden, und Entschlüsselung der verschlüsselten Informationen (I) beim Empfänger (E) mit einem speziellen Schlüssel (SS),

    **dadurch gekennzeichnet, dass**
    der allgemeine Schlüssel (AS) die Informationen (I) derartig verschlüsselt, dass die verschlüsselten Informationen (I) von verschiedenen speziellen Schlüsseln (SS) entschlüsselt werden können.

6. System zur sicheren Übertragung von Informationen (I) mit einem Sender (S) und einem Empfänger (E), wobei der Sender (S) derart gestaltet ist, dass er die zu übertragenden Informationen (I) unter Verwendung eines allgemeinen Schlüssels (AS) verschlüsselt und an einen Empfänger (E) versendet und der Empfänger (E) derart gestaltet ist, dass er die gesendeten Informationen (I) von dem Sender (S) empfängt und unter Verwendung eines speziellen Schlüssels (SS) entschlüsselt, wobei der allgemeine Schlüssel (AS) die Informationen (I) derartig verschlüsselt, dass die verschlüsselten Informationen (I) von verschiedenen speziellen Schlüsseln (SS) entschlüsselt werden können.

7. Sender (S) zum Verschlüsseln und Senden von Informationen (I) an einen Empfänger (E), wobei der Sender (S) derart gestaltet ist, dass er die zu übertragenden Informationen (I) unter Verwendung eines allgemeinen Schlüssels (AS) verschlüsselt und an einen Empfänger (E) derart versendet, dass der Empfänger (E) die gesendeten Informationen (I) von dem Sender (S) empfängt und unter Verwendung eines speziellen Schlüssels (SS) entschlüsselt, wobei der allgemeine Schlüssel (AS) die Informationen (I) derartig verschlüsselt, dass die verschlüsselten Informationen (I) von verschiedenen speziellen Schlüsseln (SS) entschlüsselt werden können.

8. Empfänger (E) zum Empfangen und Entschlüsseln von Informationen (I), die von einem Sender (S) verschlüsselt und gesendet wurden, wobei der Empfänger (E) derart gestaltet ist, dass er vom Sender (S) unter Verwendung eines allgemeinen Schlüssels (AS) verschlüsselte und an den Empfänger (E) gesendete Informationen (I) von dem Sender (S) empfängt und unter Verwendung eines speziellen Schlüssels (SS) entschlüsselt, wobei der allgemeine Schlüssel (AS) die Informationen (I) derartig verschlüsselt, daß die verschlüsselten Informationen (I) von verschiedenen speziellen Schlüsseln (SS) entschlüsselt werden können.

9. Schlüsselsystem zum Verschlüsseln von Informationen (I) mit einem allgemeinen Schlüssel (AS) und mindestens zwei speziellen Schlüsseln (SS), **dadurch gekennzeichnet, dass** die Informationen (I) vom allgemeinen Schlüssel (AS) des Schlüsselsystems verschlüsselt und dass die verschlüsselten Informationen (I) von den speziellen Schlüsseln (SS) entschlüsselt werden können.

**10.** Verwendung eines Schlüsselsystems zum Verschlüsseln von Informationen nach dem vorhergehenden Anspruch, zur Verschlüsselung von Informationen im Bereich des Pay-TV.

Fig. 1

EP 1 301 037 A1

**S**

→ I
→ SS1, ... , SSn
→ RAN

SS1 x SS2 x ... x SSn x RAN = AS
AS + I = Sig Daten
→ F

F(I) = SSS
→ Admi Daten
→ key 1

→ Admi Daten
→ key 2

→ S-key
→ D

**E**

→ SS1

Sig Daten *modulo* SS1 = I

→ F

F(I) = SSS

→ key 1

Admi Daten →
key 2 →

Admi Daten →
S-key →

D →

Sig Daten; $[\text{Admi Daten } [\text{key 2}]_{\text{key 1}}]_{\text{SSS}}$

Admi Daten; $[\text{S-key}]_{\text{key 2}}$

$[D]_{\text{S-key}}$

**Europäisches Patentamt**

## EUROPÄISCHER RECHERCHENBERICHT

Nummer der Anmeldung

EP 01 12 3235

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 118 873 A (LOTSPIECH ET AL) 12. September 2000 (2000-09-12) * Seite 5, Zeile 20 - Seite 6, Zeile 41; Abbildung 3 * --- | 1,2,4-10 | H04N7/167 |
| A | WO 00 59154 A (PHILIPS) 5. Oktober 2000 (2000-10-05) * Seite 3, Zeile 17 - Zeile 18 * * Seite 5, Zeile 33 - Seite 6, Zeile 13 * ----- | 1,2,4-10 | |

RECHERCHIERTE SACHGEBIETE (Int.Cl.7)

H04N
H04L

Der vorliegende Recherchenbericht wurde für alle Patentansprüche erstellt

| Recherchenort | Abschlußdatum der Recherche | Prüfer |
|---|---|---|
| DEN HAAG | 21. März 2002 | Dockhorn, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 12 3235

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2002

| Im Recherchenbericht angeführtes Patentdokument | Datum der Veröffentlichung | Mitglied(er) der Patentfamilie | Datum der Veröffentlichung |
|---|---|---|---|
| US 6118873 A | 12-09-2000 | JP 3195309 B2<br>JP 2000031922 A | 06-08-2001<br>28-01-2000 |
| WO 0059154 A | 05-10-2000 | CN 1304604 T<br>WO 0059154 A1<br>EP 1080558 A1 | 18-07-2001<br>05-10-2000<br>07-03-2001 |

EPO FORM P0461

Für nähere Einzelheiten zu diesem Anhang : siehe Amtsblatt des Europäischen Patentamts, Nr.12/82